(19) Europäisches Patentamt
European Patent Office
Office européen des brevets

(11) EP 0 486 916 B1

(12) EUROPÄISCHE PATENTSCHRIFT

(45) Veröffentlichungstag und Bekanntmachung des Hinweises auf die Patenterteilung:
**18.02.1998 Patentblatt 1998/08**

(51) Int Cl.[6]: **C08G 63/91**, C08L 67/02
// (C08L67/02, 69:00)

(21) Anmeldenummer: **91119182.3**

(22) Anmeldetag: **11.11.1991**

(54) **Polyester mit polycarbonatverkappten Carboxylendgruppen, daraus bestehendes Fasermaterial sowie Verfahren zu deren Herstellung**

Polyester with polycarbonate-capped carboxylic endgroups, fibre material made therefrom and process for its preparation

Polyester à groupes carboxyliques terminaux bloqués de polycarbonate, matériau fibreux à partir du polyester et procédé pour sa préparation

(84) Benannte Vertragsstaaten:
**CH DE GB LI**

(30) Priorität: **17.11.1990 DE 4036747**

(43) Veröffentlichungstag der Anmeldung:
**27.05.1992 Patentblatt 1992/22**

(73) Patentinhaber: **HOECHST AKTIENGESELLSCHAFT**
**65926 Frankfurt am Main (DE)**

(72) Erfinder:
- **Thielemann, Ralph, Dr.**
  **W-6239 Kriftel (DE)**
- **Klein, Peter, Dr.**
  **W-6200 Wiesbaden (DE)**

(56) Entgegenhaltungen:
**EP-A- 0 041 135** **US-A- 3 752 866**
**US-A- 4 171 422**

- **CHEMICAL ABSTRACTS, Band 77, Nr. 26, 25. Dezember 1972, Seite 37, Spalte 2,**
- **CHEMICAL ABSTRACTS, Band 82, Nr. 16, 21. April 1975, Seite 58, Spalte 2, Zusammenfassung Nr. 99152d, Columbus, Ohio, US; & JP-A-74 112 999 (TORAY INDUSTRIES, INC.) 28-10-1974**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 486 916 B1

Printed by Jouve, 75001 PARIS (FR)

## Beschreibung

Die vorliegende Erfindung betrifft einen Polyester, der überwiegend aus Polyethylenterephthalat-Einheiten besteht und polycarbonatverkappte Carboxylendgruppen aufweist, daraus bestehendes Fasermaterial wie Endlos- oder Stapelfasern sowie Verfahren zur Herstellung dieser Gegenstände.

Polyester mit verkappten Carboxylendgruppen sind bereits bekannt. Zur Verkappung der Carboxylendgruppen wurden dabei verschiedene mit Carboxylgruppen reagierende Verbindungen eingesetzt. So ist es bekannt, Polyester, die freie Carboxylendgruppen aufweisen, mit Epoxyden umzusetzen, wobei aus den Carboxylgruppen Estergruppen gebildet werden. Eine weitere Methode zur Verkappung von Carboxylendgruppen besteht in der Umsetzung mit Carbodiimiden. Hier bilden sich aus den Carboxylendgruppen zunächst monoacylierte Harnstoffe, die sich durch weitere Umlagerungen stabilisieren. Ein gravierender Nachteil dieser bekannten Methoden besteht in der relativ hohen Toxizität der Verkappungsagenzien und der gebildeten Umlagerungs- und Spaltprodukte, die zur Einhaltung besonderer Vorsichtsmaßnahmen bei der Durchführung der Verkappungsreaktionen zwingt.

Es ist auch bereits bekannt, Carboxylendgruppen von Polyestern durch Umsetzung mit Polycarbonaten zu verkappen. Hierbei werden Polycarbonatbausteine über Estergruppen an das Polyestermolekül gebunden. Aus der US-PS 35 63 847 ist es bekannt, Polyester, die Carboxylendgruppen aufweisen, mit 0,1 bis 2 Gew.-% Polycarbonaten umzusetzen, indem man beide Komponenten in der Schmelze mischt oder indem man beide Komponenten in fester Form, z.B. in Form von Chips mischt und diese Mischung gemeinsam extrudiert. Das erhaltene Umsetzungsprodukt dient zur Herstellung von Reifencord, der eine verbesserte Wärmebeständigkeit aufweisen soll. Aus der US-PS 3 752 866 ist es bekannt, daß bei der Umsetzung von Polyestern mit Polycarbonat nach dem in der US-PS 35 63 847 angegebenen Verfahren eine Erhöhung des Gehalts (auf zwischen 24 und 26 mmol/kg) freier Carboxylendgruppen eintritt.

Bei dem aus der US-PS 37 52 866 beschriebenen Verfahren zur Herstellung von Polyestern mit polycarbonatverkappten Carboxylendgruppen wird das Polycarbonat dem Veresterungsansatz zugesetzt, sobald dieser eine vorgegebene Viskosität erreicht. Der Ansatz wird dann noch einige Zeit gemischt, bevor er weiterverarbeitet wird. Nach diesem Verfahren läßt sich der Gehalt an freien Carboxylendgruppen im Polyester auf einen Wert von etwa 5 mmol/kg herabsenken.

Nach diesem bekannten Verfahren lassen sich jedoch nur Polyester mit relativ niedrigen Kondensationsgraden herstellen, weil dort keine Feststoffkondensation durchgeführt wird. Eine bei den nach diesem Verfahren hergestellten Polyester nachträglich durchgeführte Feststoffkondensation führt in vertretbarer Reaktionszeit auch nicht zu dem gewünschten Anstieg des mittleren Molekulargewichts.

Es ist auch nicht das erklärte Ziel dieses bekannten Verfahrens, zu Polyestern mit extrem niedrigen Carboxylendgruppen-Gehalten zu gelangen, weil die nach diesem Verfahren hergestellten Polyester zur Gewährleistung der erforderlichen Gummihaftung auf einen gewissen Gehalt an freien Carboxylendgruppen angewiesen sind.

Ein weiterer Nachteil des bekannten Verfahren zur Herstellung von Polyestern mit polycarbonatverkappten Carboxylendgruppen besteht in der relativ langen Reaktionszeit, die zur Umsetzung der Polycarbonate mit den freien Carboxylendgruppen des Polyesters erforderlich ist. Hieraus ergibt sich die Notwendigkeit, die Umsetzung in der Schmelze im Zuge des Polyesterherstellungsverfahrens auszufahren wodurch jeweils nur ganze Partien des Polyesters mit Polycarbonat verkappt werden können. Außerdem führt diese Notwendigkeit zu einer Blockierung der Herstellungsapparaturen, die naturgemäß wirtschaftliche Nachteile mit sich bringt. Wird die Reaktionszeit zwischen Carboxylendgruppen enthaltendem Polyester und Polycarbonat nach den herkömmlichen Verfahren zu weit gesenkt, so kann die angestrebte starke Herabsetzung des Carboxylendgruppengehalts des Polyesters nicht erreicht werden.

Oft ergibt sich auch die Notwendigkeit, zur Einstellung eines niedrigen Carboxylendgruppen-Gehalts in vertretbarer Reaktionszeit einen höheren Überschuß von Polycarbonat einzusetzen.
Der daraus resultierende Anteil von gegebenenfalls ungebundenem Polycarbonat im Polyester führt zu einer verschlechterten Verspinnbarkeit, verschlechterter Verstreckbarkeit und geringer Endfestigkeit des Materials.

Es wurde nun gefunden, daß man eine drastische Beschleunigung der Umsetzungsreaktion zwischen Polycarbonaten und Polyestern, die freie Carboxylendgruppen aufweisen (Verkappungsreaktion), erreichen kann, wenn man dem Veresterungsansatz vor der Zugabe des Polycarbonats 50 bis 500 ppm, vorzugsweise 100 bis 300 ppm, eines in der Polyester-Schmelze löslichen Salzes eines Alkali- oder Erdalkali-Metalls zusetzt. Hierzu geeignet sind beispielsweise Alkali- oder Erdalkalisalze einer aliphatischen, cycloaliphatischen oder aromatischen Mono- oder Dicarbonsäure, einer aromatischen Phosphinsäure oder der Jodwasserstoffsäure.

Weiterhin bewirkt die erfindungsgemäß in Gegenwart der genannten Salze durchgeführte Umsetzung des Polyesters mit dem Polycarbonat eine Erhöhung des mittleren Molekulargewichts des Polyesters, wodurch der durch die thermische Belastung beim Extrudieren eintretende Molekulargewichtsabbau (Spinnabbau) ausgeglichen wird.

Ein Gegenstand der vorliegenden Erfindung ist somit ein Verfahren zur Herstellung eines Polyesters mit polycarbonatverkappten Carboxylendgruppen mit verbesserter Hydrolyse- und Aminolysestabilität und guter Gummihaftung durch Umsetzung eines carboxylgruppenhaltigen Polyesters, welcher ≥85 Mol-% Polyethylenterephthalat-Einheiten enthält, mit bis zu 5 Gew.-% Polycarbonat und anschließende Extrusion in an sich bekannter Weise, dadurch gekennzeichnet, daß dem carboxylendgruppenhaltigen Polyester 50 bis 500 ppm eines in der Polyesterschmelze löslichen Salzes eines Alkali- oder Erdalkalimetalls als Verkappungskatalysator einverleibt wird, und daß das Polycarbonat unmittelbar vor dem Extruder oder in den Extruder selbst in den Polyesterstrom eingespeist wird.

Geeignet hierzu sind beispielsweise Alkali-oder Erdalkalisalze von aliphatischen, cycloaliphatischen oder aromatischen Mono- oder Dicarbonsäuren, einer aromatischen Phosphinsäure oder der Jodwasserstoffsäure.

Als Dicarbonsäuren, die neben Terephthalsäure bei der Herstellung des erfindungsgemäßen Polyesters eingesetzt werden können, kommen modifizierend wirkende aliphatische oder cycloaliphatische Dicarbonsäuren mit bis zu 10 C-Atomen wie Bernsteinsäure, Glutarsäure, Adipinsäure, Pimelinsäure, Suberinsäure, Azelainsäure, Sebacinsäure, Cyclohexandicarbonsäure, aromatische Dicarbonsäuren wie z.B. Isophthalsäure, Sulfoisophthalsäure, 4,4'-Dicarboxydiphenoxyethan, 4,4'-Dicarboxy-biphenyl sowie Dicarbonsäuren kondensierter Aromaten wie z.B. 1,5- oder 2,6-Naphthalindicarbonsäure oder Anthracendicarbonsäure in Betracht. Bevorzugt sind Polyester, die nicht mehr als 15 mol% der modifizierend wirkenden Dicarbonsäuren enthalten. Bevorzugt werden als modifizierende Dicarbonsäurekomponenten aromatische Dicarbonsäuren wie z.B. Isophthalsäure oder Sulfo-isophthalsäure. Besonders bevorzugt ist jedoch die Herstellung der erfindungsgemäßen Polyester aus reiner Terephthalsäure. Die bevorzugte Glykolkomponente ist Äthylenglykol, die vorzugsweise in reiner Form eingesetzt wird. Soll eine Modifizierung des Polyesters über die Glykolkomponente erfolgen, so eignen sich hierzu Diole mit mehr als 2 Kohlenstoffatomen wie z.B. Trimethylenglycol, Tetramethylenglycol, Hexamethylenglycol, Decamethylenglycol, Cyclohexandiol, Bis-(Hydroxymethyl)-cyclohexan oder auch Di- oder Triglykol sowie in geringen Mengen auch Polyäthylenglykol mit einem Molgewicht von 300 bis ca. 1000. Prinzipiell können auch andere bekannte modifizierend wirkende Dicarbonsäuren oder Diole zugesetzt werden, sofern spezielle Eigenschaften des Polyesters erreicht werden sollen.

Die Kondensation des Polyesters kann ein- oder zweistufig durchgeführt werden. Bei der zweistufigen Kondensation wird die zweite Stufe vorzugsweise als Festphasenkondensation ausgeführt. Hierzu wird der in der ersten Stufe erhaltene, bis zu einer mittleren Viskosität kondensierte Polyester in bekannter Weise zerkleinert und dann bei steigender Temperatur, die jeweils unterhalb des Schmelzpunktes des Polyestermaterials liegt, vorzugsweise im Vakuum, bis zu dem gewünschten Endkondensationsgrad kondensiert.

In der Regel wird die Kondensation mindestens bis zu einer intrinsischen Viskosität von 0,6 bis 1,18 dl/g vorzugsweise 0,9 bis 1,11 dl/g durchgeführt und die Zusammensetzung der der Reaktionsmasse so eingestellt, daß bei Abschluß derKondensation ein Carboxylendgruppengehalt von maximal 5 bis 20 mmol/kg erreicht wird.

Die intrinsische Viskosität wird gemessen bei 25°C an Lösungen des Polyesters in Dichloressigsäure. Die intrinsische Viskosität ist dabei der Grenzwert der inhärenten Viskosität für eine gegen Null gehende Polymerkonzentration. Sie entspricht der Formel:

$$[\eta] = \lim_{c \to 0} \frac{\ln \eta_{rei}}{c} = \lim_{c \to 0} \frac{\eta_{sp}}{c}$$

Eine aliphatische Mono- oder Dicarbonsäure, die in Form eines Alkali- oder Erdalkali-Salzes dem Polyester als Beschleunigungskatalysator für die Umsetzung mit dem Polycarbonat zugefügt werden kann, ist in der Regel gesättigt und hat 1 bis 18, vorzugsweise 1 bis 8 und insbesondere 1 bis 3 Kohlenstoffatome, in der aliphatischen Kette, eine cycloaliphatische Mono- oder Dicarbonsäure hat in der Regel 5 - 8, vorzugsweise 6 C-Atome in dem cycloaliphatischen Kern und eine aromatische Mono- oder Dicarbonsäure leitet sich vom Benzol oder Naphthalin ab. Beispiele für solche Zusätze sind Alkalistearat, Alkalilaurat, Alkalicapronat, Alkalibutyrat, Alkalipropionat, Alkali-oder Erdalkaliacetat und -Formiat, Alkalioxalat, Alkali- oder Erdalkaliglutarat, Alkali- oder Erdalkali-Cyclohexylcarboxylat oder -dicarboxylat, Alkali- oder Erdalkalibenzoat oder tere- oder isophthalat. Besonders bevorzugt als beschleunigender Zusatz sind Alkali- und Erdalkaliacetat. Als Alkali- und Erdalkalisalze kommen insbesondere in Betracht: die Lithium-, Natrium-, Kalium- und Kalziumsalze.

Als aromatische Phosphinsäuren, die in Form ihrer Alkalioder Erdalkalisalz als reaktionsbeschleunigende Zusätze eingesetzt werden können, kommt insbesondere die Benzolphosphinsäure oder deren im Phenylkern substituierte Derivate in Betracht. Der Benzolkern der Benzolphosphinsäure kann dabei 1 bis 3, vorzugsweise 1 Substituenten aus der Gruppe Niederalkyl, Niederalkoxy und Halogen aufweisen. Besonders bevorzugt sind hier die Lithium- und die Natriumsalze.

Als Polycarbonat, mit dem der Polyester umgesetzt wird, kommt insbesondere ein solches in Betracht, das sich von Dihydroxydiphenylalkanen ableitet. Solche Polycarbonate entsprechen der Formel

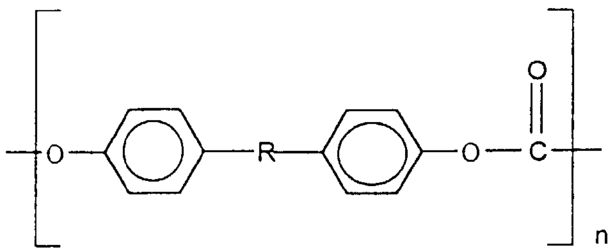

worin R ein geradkettiger oder verzweigter zweiwertiger aliphatischer Rest mit 1 bis 8, vorzugsweise 1 bis 3 Kohlenstoffatomen, insbesondere der Isopropylidenrest, und n eine Zahl von 10 bis 400 ist.

Vorzugsweise werden für die Umsetzung mit dem carboxylendgruppenhaltigen Polyester solche Polycarbonate der obigen Formel eingesetzt, die bezüglich ihrer intrinsischen Viskosität und/oder ihres Schmelzpunktes an den Polyester angepaßt sind, d.h. deren intrinsische Vislzosität sich von der Viskosität des Polyesters um nicht mehr als +/- 0,3 dl/g, bzw. deren Schmelzpunkt sich von dem des Polyesters um nicht mehr als +/- 10°C unterscheidet.

Die hohe Reaktionsgeschwindigkeit zwischen dem carboxylendgruppenhaltigen Polyester und dem Polycarbonat beim erfindungsgemäßen Verfahren hat zur Folge, daß für die Umsetzung der beiden Polymeren eine vergleichsweise sehr kurze Verweilzeit ausreicht und gestattet es, Filamente aus dem polycarbonatverkappte Carboxylendgruppen enthaltenden Polyester herzustellen, indem man den wie oben beschrieben hergestellten und mit einem Alkali- oder Erdalkalisalz einer der genannten aliphatischen, cycloaliphatischen oder aromatischen Mono- oder Dicarbonsäuren, oder Phosphinsäuren oder einem Alkali- oder Erdalkalijodid versetzten Polyester einsetzt und dem Granulatstrom zum Extruder bis zu 5 Gew.-%, vorzugsweise bis zu 1 Gew.-% eines Polycarbonat-Granulats, vorzugsweise kontinuierlich, zumischt. Das Polycarbonat kann aufgrund der hohen Reaktionsgeschwindigkeit auch noch zu einem späteren Zeitpunkt, nämlich kurz vor dem Ausstoß des Materials aus dem Extruder in die Misch- und/oder Schmelzzone des Extruders eingespeist werden.

Dieses erfindungsgemäße Verfahren zur Herstellung von Polyesterfilamenten hat den Vorteil, daß im Herstellungsprozeß des Polyesters keinerlei Kapazitäten durch die Herstellung von Sonderchargen blockiert werden. Vielmehr kann die Spinnaparatur in kürzester Zeit von der Herstellung normaler Polyesterfasern auf die Herstellung erfindungsgemäßer Polyesterfasern umgeschaltet werden, einfach indem man unmittelbar vor dem Extruder oder auch noch in den Extruder selbst das Polycarbonat in den Polyesterstrom einspeist.

Das erfindungsgemäße Verfahren zur Herstellung von Polyesterfilamenten kann auch dahingehend variiert werden, daß man eine Mischung aus carboxylendgruppenhaltigem Polyester, der 50 bis 500 ppm der oben genannten Beschleunigungszusätze enthält, in fester Form, vorzugsweise in Granulat oder Schnitzelform, mit einem festen, z.B. einem Granulat oder mit Schnitzeln eines der oben genannten Polycarbonate mischt und diese vorgefertigte Mischung in üblicher Weise durch Extrudieren verspinnt.

Das erfindungsgemäße Verfahren weist nicht nur erhebliche verfahrenstechnische Vorteile auf, sondern es liefert auch einen Polyester mit einer überraschend günstigen Kombination technisch vorteilhafter Eigenschaften. Ein weiterer Gegenstand ist daher ein Polyester mit verbesserter Hydrolyse- und Aminolysestabilität bei gleichzeitig guter Gummihaftung, der sich insbesondere zur Herstellung von Reifencord eignet, der zu mindestens 85 Mol-%, vorzugsweise mindestens 95 Mol-% aus PolyäthylenterephthalatBausteinen besteht, der 5 bis 15 mMol/kg polycarbonatverkappte Carboxylendgrupen und maximal 4,5 mMol/kg freie Carboxylendgruppen aufweist, und der nach dem Verspinnen eine Reißfestigkeit von mehr als 70 cN/tex, eine Restfestigkeit nach dem unten beschriebenen Hydrolysetest von über 50 % und eine Restfestigkeit nach dem unten beschriebenen Aminolysetest von mehr als 70 % aufweist, und dessen Gummihaftung mehr als 95 % eines entsprechenden nicht mit Polycarbonat umgesetzten Polyesters beträgt.

Ein weiteres Merkmal des erfindungsgemäßen Polyesters ist sein Gehalt von 50 bis 500 ppm, vorzugsweise 100 bis 300 ppm eines der oben genannten, in der Polyesterschmelze löslichen Alkali- oder Erdalkalisalzes.

Im Hinblick auf die Möglichkeit, nach dem erfindungsgemäßen Spinnverfahren Mischungen von Carboxylendgruppen aufweisenden und 50 bis 500 ppm der oben genannten Beschleunigungszusätze enthaltenden Polyester mit Polycarbonaten zu verspinnen, ist ein weiterer Gegenstand der Erfindung eine vorgefertigte Mischung aus einem solchen Polyester und einem der oben genannten Polycarbonate in fester Form, vorzugsweise in Granulat- oder Schnitzelform, die direkt zur Herstellung von Synthesefasern aus dem erfindungsgemäßen Polyestermaterial dienen kann.

Die Prüfungen der aus dem erfindungsgemäßen Polyester erhaltenen Filamente auf Hydrolyse- und Aminolysefestigkeit sowie auf Gummihaftung werden wie folgt ausgeführt.
Aus dem erfindungsgemäßen Polyester wird ein Filamentgarn vom Titer dtex 1440f200 und einer Festigkeit von 70-75 cN/tex ersponnen. Dieses Garn wird unmittelbar für den Hydrolysetest eingesetzt.
Für den Aminolysetest wird aus dem Garn ein Zweifachzwirn mit 50 Drehungen in Z/S-Richtung hergestellt.

Die Herstellung des Zwirns für den Test auf Gummihaftung erfolgt durch Fachen und Zusammendrehen der Garne von 3 Prüfspulen zu einem Vorzwirn der Konstruktion 1440 dtex x 3 S 130 und erneutem Fachen und Verzwirnen von drei Vorzwirnen zu einem Endzwirn der Konstruktion 1440 dtex x 3 S 130 x 3 Z 130.

1. Aminolyse

Für diesen Test werden 20 m des obigen Zwirns in latexierter Form oder als Rohzwirn 24 Stunden lang bei 80°C mit einer 5 %igen wäßrigen Äthylendiaminlösung behandelt. Das behandelte Material wird bei 50 - 60°C im Trockenschrank getrocknet und anschließend wird von dem Garn vor und nach der Behandlung die Reißfestigkeit ermittelt. Die bei dieser Bestimmung erhaltene Restfestigkeit in % ist ein Maß für die Aminoylseresistenz des Garns.

2. Hydrolyse

50 m des vorbereiteten Garns werden 50 Stunden mit Dampf von 135°C behandelt. Danach wird das Material getrocknet und seine Reißfestigkeit bestimmt. Die sich im Vergleich mit der Reißfestigkeit des unbehandelten Garns ergebende Restfestigkeit ist ein Maß für die Hydrolyseresistenz des Garns.

3. Gummihaftung

Zur Bestimmung der Gummihaftung wird der wie oben beschrieben hergestellte 1440 dtex x 3S130 x 3Z130-Zwirn in latexierter Form einseitig in einer Länge l von 10 mm in eine Gummimischung einvulkanisiert.

Anschließend wird bei einer Ziehgeschwindigkeit von 300 m/min die Kraft gemessen, die nötig ist, um den einvulkanisierten Zwirn aus dem Gummiverband herauszureißen. Zum Vergleich wird jeweils ein Garn aus einem nicht mit Polycarbonat umgesetzten normalen Polyester in gleicher Weise latexiert, einvulkanisiert und die für dieses Garn erforderliche Ausreißkraft gemessen. Das zu diesem Vergleich eingesetzte Standardpolyestergarn wird in einem Klimaraum gelagert. Der Wert Q für die Gummihaftung ist das Verhältnis der Ausreißkräfte von Probe und Blindwert.

Nach dem erfindungsgemäßen Verfahren wird eine überraschende Zunahme der Reaktionsgeschwindigkeit zwischen dem freie Carboxylendgruppen aufweisenden Polyester und dem Polycarbonat erzielt. Dies ermöglicht eine schnelle Anpassung des Verfahrens an die Bedürfnisse des Marktes und damit eine außerordentlich preisgünstige Produktion. Es wird damit auch möglich, eine Vormischung der Polyester- und Polycarbonatcomponenten herzustellen und in den Handel zu bringen, die bei der Extrusion in der gewünschten Weise reagiert und zu den erfindungsgemäßen Polyestern führt. Der nach dem erfindungsgemäßen Verfahren hergestellte erfindungsgemäße Polyester und die daraus erhältlichen Filamente weisen eine anwendungstechnisch besonders glückliche Kombination wertvoller technischer Eigenschaften auf, nämlich hohe Hydrolyse- und Aminolyseresistenz, hohe Festigkeit und Gummihaftung. Es ist besonders überraschend, daß es damit gelungen ist, Polyester mit einer relativ niederen Konzentration an freien Carboxylgruppen und entsprechend hohe Hydrolyse- und Aminolyseresistenz bei gleichzeitig guter Gummihaftung herzustellen.

Die folgenden Ausführungsbeispiele veranschaulichen das erfindungsgemäße Verfahren.

Beispiele 1 bis 8

30 kg Dimethylterephthalat und 20 l Ethylenglykol werden in Gegenwart von 330 ppm Manganacetat in bekannter Weise umgeestert. Den Ansätzen der Beispiele 4 bis 8 werden zusätzlich noch die in der Tabelle I angegebenen Mengen an Alkali- bzw. Erdalkalisalzen als erfindungsgemäße "Verkappungskatalysatoren" zugeführt.

Nach der Umesterung wird der Umesterungskatalysator (Manganacetat) durch Zusatz von phosphoriger Säure stabilisiert. Anschließend wird dem Ansatz 390 ppm Antimontrioxid zugesetzt, die Temperatur auf 285°C erhöht und bei einem Druck von 0,13 mbar kondensiert, bis die gewünschte intrinsische Viskosität erreicht ist.

Die nach den Ansätzen 2 bis 8 erhaltene Polyestergranulate werden mit den in der Tabelle I angegebenen Mengen eines Polycarbonat-Granulats (z.B. eines ®Makrolons der Firma Bayer) gemischt und die erhaltenen Granulatgemische bei einer Temperatur von 285°C extrudiert.

Durch Änderung der Fördermenge lassen sich unterschiedliche Verweilzeiten im Extruder einstellen. Das extrudierte Polymer wird durch die intrinsische Viskosität IV und den Carboxylgruppengehalt CEG charakterisiert (Tabelle I). Die Beispiele 4 bis 8 zeigen die drastische Reaktionsbeschleunigung, die sich durch Zusatz der erfindungsgemäßen Katalysatoren ergibt. Im Gegensatz zum Stand der Technik ist damit auch bei den bei Extrusionen üblicherweise vorhandenen kurzen Verweilzeiten eine vollständige Reaktion möglich.

Die in den Tabellen verwendeten Abkürzungen haben die folgenden Bedeutungen:
NaAc= Natriumazetat, LiAc= Lithiumazetat, CaAc= Kalziumazetat, NaJ = Natriumjodid, NaBP= Natrium-benzolphosphinat, IV = intrinsische Viskosität, gemessenen Dichloressigsäure bei 25°C, CEG = Gehalt an Carboxyl-Endgruppen

in mmol/kg.

Beispiele 9 und 10

Wie bei den Beispielen 1 bis 8 beschrieben wird zunächst ein Polyester hergestellt, wobei in die Ansätze des Beispiels 10 noch die in Tabelle II angegebenen Mengen eines erfindungsgemäßen Verkappungskatalysators (Natriumazetat) zugefügt werden. Der Polyester wird für die folgenden Ausprüfungen auf eine intrinsische Viskosität von 1,02 dl/g feststoffkondensiert. Das in der Tabelle angegebene Polycarbonat (®Makrolon) wurde dem Polyester vor der Extrusion kontinuierlich zugeführt.

Das Material wird anschließend bei einer Massetemperatur von 290°C und einer Abzugsgeschwindigkeit von 3000 m/min versponnen. Nach einer Verstreckung von 1:2,2 ergibt sich ein Filamentgarn von Titer 1440 dtex wie es z.B. für Reifencord eingesetzt werden kann.
Das so hergestellte Garn wird in der oben beschriebenen Weise auf Hydrolyse- und Aminolysebeständigkeit sowie auf Gummihaftung geprüft.

Aus den Ergebnissen der Schädigungsprüfungen in Tabelle 1 läßt sich wiederum der drastische Einfluß eines erfindungsgemäßen Katalysatorzusatzes ablesen (Beispiel 10 B). Gegenüber dem Stand der Technik (Beispiel 9B - 9C) ergibt sich bei deutlich reduziertem Polycarbonatzusatz eine weitere Verringerung des Carboxylgruppengehaltes. Dies äußert sich neben einer Verbesserung in den chemischen Beständigkeiten vor allem auch in einer Erhöhung der Garnfestigkeit.

Tabelle I

| Bsp. Nr. | Polycarbonat-Zusatz Gew.[%] | Katalysator [ppml | Verweilzeit [min] | IV [dl/g] | CEG [mmol/kg] |
|---|---|---|---|---|---|
| 1 A | ----- | ------- | 3,5 | 0,64 | 26 |
| 1 B | | | 5 | 0,65 | 27 |
| 2 A | 1% | | 3,5 | 0,67 | 22 |
| 2 B | 1% | | 5 | 0,67 | 20 |
| 3 A | 3% | | 3,5 | 0,70 | 10 |
| 3 B | 3% | | 5 | 0,69 | 8 |
| 4 A | 1% | 300 ppm NaAc | 3,5 | 0,67 | 4 |
| 4 B | 1% | 300 ppM NaAc | 5,0 | 0,66 | 5 |
| 5 A | 1% | 300 ppm NaJ | 3,5 | 0,66 | 4 |
| 5 B | 1% | 300 ppm NaJ | 5,0 | 0,66 | 2 |
| 6 A | 1% | 361 ppm NaBP | 3,5 | 0,68 | 5 |
| 6 B | 1% | 361 ppm NaBP | 5,0 | Ö,66 | 3 |
| 7 A | 1% | 225 ppm LiAc | 3,5 | 0,68 | 7 |
| 7 B | 1% | 225 ppm LiAc | 5,0 | 0,67 | 11 |
| 8 A | 1% | 349 ppm $CaAc_2$ | 3,5 | 0,65 | 12 |
| 8 B | 1% | 349 ppm $CaAc_2$ | 5,0 | 0,64 | 10 |

TABELLE II

| Beisp. Nr. | Polycarbonat-zusatz [Gew.-%] | Katalysator [ppm] | IV [dl/g] | CEG [mmol/kg] | Garn-festigkeit vor dem Test [cN/tex] | Restfestigkeit nach Amino-lyse % | Hydro-lyse % | Gummi-haftung Q |
|---|---|---|---|---|---|---|---|---|
| 9 A | ------- | ---- | 0,91 | 12 | 73 | 67 | 27 | 0,87 |
| 9 B | 0,5% Makrolon | ---- | 0,92 | 10 | 72 | 66 | 41 | 0,97 |
| 9 C | 1,0% Makrolon | ---- | 0,92 | 6 | 71 | 65 | 46 | 1,02 |
| 9 D | 2,0% Makrolon | ---- | 0,90 | 2 | 64 | 65 | 48 | 1,03 |
| 10 A | ------- | 150 ppm NaAc | 0,93 | 14 | 72 | 69 | 27 | 1,14 |
| 10 B | 0,5% Makrolon | 150 ppm NaAc | 0,94 | 4 | 73 | 72 | 53 | 1,14 |

Beispiel 11

Wie in den Beispielen 1 bis 8 beschrieben wurde ein Polyester hergestellt, jedoch zunächst ohne Zusatz eines erfindungsgemäßen Verkappungskatalysators. Dabei wurde der Polyester solange kondensiert, bis eine intrinsische Viskosität (IV) von 0,62 dl/g erreicht war.

Danach wurde

A) etwa 1/3 des so erhaltenen Polyesters dem Reaktor sofort entnommen, der Rest (2/3) des Polyesters wurde dann weiterkondensiert.
B) Nach einer weiteren Kondensationszeit von 5 Min wurde dem Reaktor wieder etwa 1/3 der Gesamt-Polyestermenge entnommen und
C) der Rest wurde noch weitere 5 Min kondensiert (Gesamt-Kondensationszeit = 10 Min).

An den so hergestellten Polyestern wurde die intrinsische Viskosität gemessen und der Gehalt an Carboxyl-Endgruppen (CEG) bestimmt.
Die erhaltenen Werte sind in der Tabelle III angegeben.

Beispiel 12

Wie in Beispiel 11 beschrieben wurde ein Polyester hergestellt, zunächst ohne Zusatz eines erfindungsgemäßen Verkappungskatalysators.
Dabei wurde der Polyester solange kondensiert, bis eine intrinsische Viskosität (IV) von 0,62 dl/g ereicht war. Anschließend wurde der Ansatz unter kräftiger Durchmischung mit 1 Gew.-%, bezogen auf das Gesamtgewicht des Ansatzes, eines handelsüblichen Polycarbonats versetzt.
Danach wurde

A) etwa 1/4 des so erhaltenen Polyesters dem Reaktor sofort entnommen, der Rest (3/4) des Polyesters wurde dann weiterkondensiert,
B) nach einer weiteren Kondensationszeit von 3 Min wurde dem Reaktor wieder etwa 1/4 der Gesamt-Polyestermenge entnommen,
C) nach einer weiteren Kondensationszeit von 2 Min wurde dem Reaktor wieder etwa 1/4 der Gesamt-Polyestermenge entnommen,
D) der Rest wurde noch weitere 5 Min kondensiert (Gesamt-Kondensationszeit = 10 Min).

An den so hergestellten Polyestern wurde die intrinsische Viskosität gemessen und der Gehalt an Carboxyl-Endgruppen (CEG) bestimmt.
Die erhaltenen Werte sind in der Tabelle III angegeben.

Beispiel 13

Wie in Beispiel 11 beschrieben wurde ein Polyester hergestellt, zunächst ohne Zusatz eines erfindungsgemäßen Verkappungskatalysators. Dabei wurde der Polyester solange kondensiert, bis eine intrinsische Viskosität (IV) von 0,62 dl/g erreicht war. Anschließend wurde der Ansatz unter kräftiger Durchmischung mit 300 ppm Natriumacetat, bezogen auf das Gesamtgewicht des Ansatzes, versetzt.

Danach wurde

A) etwa 1/3 des so erhaltenen Polyesters dem Reaktor sofort entnommen, der Rest (2/3) des Polyesters dann weiterkondensiert,
B) nach einer weiteren Kondensationszeit von 5 Min wurde dem Reaktor wieder etwa 1/3 der Gesamt-Polyestermenge entnommen,
C) der Rest wurde noch weitere 5 Min kondensiert (Gesamt-Kondensationszeit = 10 Min).

An den so hergestellten Polyestern wurde die intrinsische Viskosität gemessen und der Gehalt an Carboxyl-Endgruppen bestimmt.
Die erhaltenen Werte sind in der Tabelle III angegeben.

Beispiel 14

Wie in Beispiel 11 beschrieben wurde ein Polyester hergestellt, zunächst ohne Zusatz eines erfindungsgemäßen Verkappungskatalysators. Dabei wurde der Polyester solange kondensiert, bis eine intrinsische Viskosität von (IV) von 0,62 dl/g erreicht war.

Anschließend wurde der Ansatz unter kräftiger Durchmischung mit 300 ppm Natriumacetat und 1 Gew.-%, bezogen auf das Gesamtgewicht des Ansatzes, eines handelsüblichen Polycarbonats versetzt.

Danach wurde

A) etwa 1/4 des so erhaltenen Polyesters dem Reaktor sofort entnommen, der Rest (3/4) des Polyesters wurde dann weiterkondensiert,
B) nach einer weiteren Kondensationszeit von 3 Min wurde dem Reaktor wieder etwa 1/4 der Gesamt-Polyestermenge entnommen,
C) nach einer weiteren Kondensationszeit von 2 Min wurde dem Reaktor wieder etwa 1/4 der Gesamt-Polyestermenge entnommen,
D) der Rest wurde noch weitere 5 Min kondensiert (Gesamt-Kondensationszeit = 10 Min).

An den so hergestellten Polyestern wurde die intrinsische Viskosität gemessen und der Gehalt an Carboxyl-Endgruppen (CEG) bestimmt.
Die erhaltenen Werte sind in der Tabelle III angegeben.

Tabelle III

| Nr. | Polycarbonat-Zusatz | Katalysator | Reaktionszeit [min] | IV [dl/g] | CEG [mmol/kg] |
|---|---|---|---|---|---|
| 11A | --- | --- | 0 | 0,62 | 14 |
| 11B | --- | --- | 5 | 0,62 | 13 |
| 11C | --- | --- | 10 | 0,62 | 14 |
| 12A | 1 % | --- | 0 | 0,62 | 8 |
| 12B | 1 % | --- | 3 | 0,65 | 8 |
| 12C | 1 % | --- | 5 | 0,62 | 8 |
| 12D | 1 % | --- | 10 | 0,61 | 6 |
| 13A | --- | 300 ppm NaAc | 0 | 0,62 | 10 |
| 13B | --- | 300 ppm NaAc | 5 | 0,61 | 11 |
| 13C | --- | 300 ppm NaAc | 10 | 0,61 | 13 |
| 14A | 1 % | 300 ppm NaAc | 0 | 0,62 | 10 |
| 14B | 1 % | 300 ppm NaAc | 3 | 0,63 | 6 |
| 14C | 1 % | 300 ppm NaAc | 5 | 0,62 | 1 |
| 14D | 1 % | 300 ppm NaAc | 10 | 0,62 | 0 |

Unter den vergleichbaren Reaktionsbedingungen zeigt sich auch hier eine durch den Katalysator hervorgerufene Reaktionsbeschleunigung.

## Patentansprüche

**1.** Verfahren zur Herstellung eines Polyesters mit polycarbonatverkappten Carboxylendgruppen mit verbesserter Hydrolyse- und Aminolysestabilität und guter Gummihaftung durch Umsetzung eines carboxylgruppenhaltigen Polyesters, welcher ≥85 Mol-% Polyethylenterephthalat-Einheiten enthält, mit bis zu 5 Gew.-% Polycarbonat und anschließende Extrusion in an sich bekannter Weise, dadurch gekennzeichnet, daß dem carboxylendgruppenhaltigen Polyester 50 bis 500 ppm eines in der Polyesterschmelze löslichen Salzes eines Alkali- oder Erdalkalimetalls als Verkappungskatalysator einverleibt wird, und daß das Polycarbonat unmittelbar vor dem Extruder oder in den Extruder selbst in den Polyesterstrom eingespeist wird.

2. Verfahren gemäß Anspruch 1, dadurch gekennzeichnet, daß der Verkappungskatalysator ein Alkali- oder Erdalkalisalz einer aliphatischen, cycloaliphatischen oder aromatischen Mono- oder Dicarbonsäure, einer aromatischen Phosphinsäure oder der Jodwasserstoffsäure ist.

3. Verfahren gemäß Anspruch 2, dadurch gekennzeichnet, daß die aliphatische Monocarbonsäure 1 bis 18 C-Atome hat, und die aromatische Phosphinsäure Benzolphosphinsäure ist, die im Phenylkern noch substituiert sein kann.

4. Verfahren gemäß Anspruch 2, dadurch gekennzeichnet, daß die aliphatische Monocarbonsäure Essigsäure und die aromatische Phosphinsäure Benzolphosphinsäure ist.

5. Verfahren gemäß mindestens einem der Ansurüche 1 bis 4, dadurch gekennzeichnet, daß das Alkali- oder Erdalkalisalz ein Lithium-, Natrium-, Kalium- oder Kalziumsalz ist.

6. Verfahren gemäß mindestens einem der Ansprüche 1 bis 5, dadurch gekennzeichnet, daß das Polycarbonat der Formel

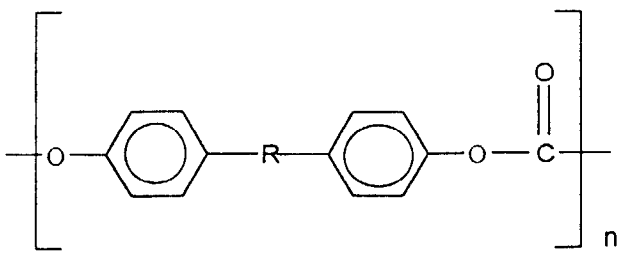

entspricht, worin R ein geradkettiger oder verzweigter zweiwertiger aliphatischer Rest mit 1 bis 8 C-Atomen, und n eine Zahl von 10 bis 400 ist.

7. Polyester mit verbesserter Hydrolyse- und Aminolysestabilität und guter Gummihaftung insbesondere zur Herstellung von Reifencord, dadurch gekennzeichnet, daß er zu mindestens 85 Mol-% aus Polyäthylenterephthalatbausteinen besteht, 5 bis 15 mMol/kg polycarbonatverkappte Carboxylendgruppen und maximal 4,5 mMol/kg freie Carboxylendgruppen aufweist und daß er eine Reißfestigkeit von mehr als 70 cN/tex, eine Restfestigkeit nach dem Hydrolysetest von mehr als 50 %, eine Restfestigkeit nach dem Aminolysetest von mehr als 70 % und eine Gummihaftung von mehr als 95 % hat.

8. Verwendung des Polyesters gemäß Anspruch 7 zur Herstellung von Filamenten und Fasern.

9. Verwendung der Polyester gemäß Anspruch 7 zur Herstellung von Reifencord.

## Claims

1. A process for preparing a polyester having polycarbonate capped carboxyl end groups improved hydrolysis and aminolysis stability and good adhesion to rubber by reaction of a polyester which contains carboxyl groups and ≥ 85 mol% of polyethylene terephthalate units with up to 5% by weight of polycarbonate and subsequent extrusion in a conventional manner, characterized in that it comprises incorporating into the polyester which contains carboxyl end groups a capping catalyst comprising from 50 to 500 ppm of an alkali or alkaline earth metal salt which is soluble in the polyester melt and feeding the polycarbonate into the polyester stream immediately upstream of the extruder or within the extruder itself.

2. The process of claim 1, wherein the capping catalyst is an alkali or alkaline earth metal salt of an aliphatic, cycloaliphatic or aromatic mono- or dicarboxylic acid, of an aromatic phosphinic acid or of hydroiodic acid.

3. The process of claim 2, wherein the aliphatic monocarboxylic acid has from 1 to 18 carbon atoms and the aromatic phosphinic acid is benzenephosphinic acid, which may be further substituted in the phenyl nucleus.

**4.** The process of claim 2, wherein the aliphatic monocarboxylic acid is acetic acid and the aromatic phosphinic acid is benzenephosphinic acid.

**5.** The process of at least one of claims 1 to 4, wherein the alkali or alkaline earth metal salt is a lithium, sodium, potassium or calcium salt.

**6.** The process of at least one of claims 1 to 5, wherein the polycarbonate conforms to the formula

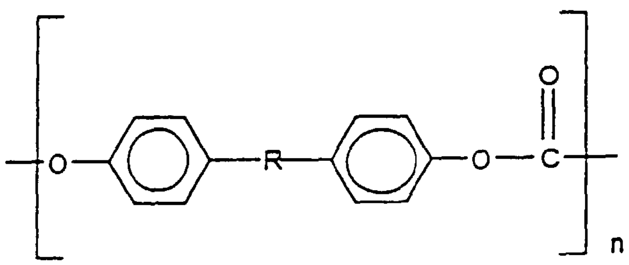

where R is a straight-chain or branched divalent aliphatic radical of from 1 to 8 carbon atoms and n is from 10 to 400.

**7.** A polyester having improved hydrolysis and aminolysis stability and good adhesion to rubber, in particular for manufacturing tire cord, characterized in that it contains at least 85 mol% of polyethylene terephthalate units, has from 5 to 15 mmol of polycarbonate capped carboxyl end groups/kg and not more than 4.5 mmol of free carboxyl end groups/kg, and has a breaking strength of more than 70 cN/tex, a residual strength of above 50% following the hydrolysis test and of more than 70% following the aminolysis test, and an adhesion to rubber value of more than 95%.

**8.** The use of the polyester of claim 7 for preparing filaments and fibers.

**9.** The use of the polyester of claim 7 for manufacturing tire cord.

## Revendications

**1.** Procédé de préparation d'un polyester comportant des groupes terminaux carboxyles coiffés ayant une stabilité à l'hydrolyse et à l'aminolyse améliorée et une bonne adhérence au caoutchouc, par réaction d'un polyester comportant des groupes carboxyle, qui a une teneur ≥85 % en moles en motifs poly(éthylène téréphtalate) avec jusqu'à 5 % en poids de polycarbonate et ensuite, extrusion de façon connue en soi, caractérisé en ce que l'on incopore au polyester comportant des groupes hydroxyle, en tant que catalyseur de coiffage, de 50 à 500 ppm d'un sel de métal alcalin ou alcalino-terreux soluble dans la matière polyester fondue et en ce que l'on apporte le polycarbonate directement avant l'extrusion ou on l'introduit dans le flux de polyester dans l'extrudese elle-même.

**2.** Procédé selon la revendication 1, caractérisé en ce que le catalyser de coiffage est un sel de métaux alcalins ou alcalino-terreux d'un acide mono- ou dicarboxylique aliphatique, cycloaliphatique ou aromatique, d'un acide phosphinique aromatique ou de l'iodure d'hydrogène.

**3.** Procédé selon la revendication 2, caractérisé en ce que l'acide monocarboxylique aliphatique comporte 1 à 8 atomes de carbone et l'acide phosphinique aromatique est l'acide benzènephosphinique, lequel peut être encore substitué sur le noyau phényle.

**4.** Procédé selon la revendication 2, caractérisé en ce que l'acide monocarboxylique aliphatique est l'acide acétique et l'acide phosphinique aromatique, l'acide benzènephosphinique.

**5.** Procédé selon au moins une des revendications 1 à 4, caractérisé en ce que le sel de métal alcalin ou alcalino-terreux est un sel de lithium, de sodium, de potassium ou de calcium.

**6.** Procédé selon au moins l'une des revendications 1 à 5, caractérisé en ce que le polycarbonate répond à la formule

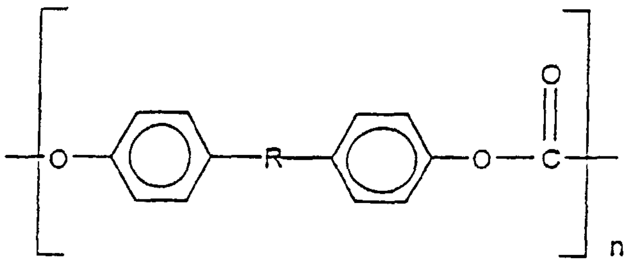

dans laquelle R est un reste aliphatique bivalent, linéaire ou ramifié, comportant 1 à 8 atomes de carbone et n est un nombre de 10 à 400.

**7.** Polyester ayant une résistance à l'hydrolyse et à l'aminolyse améliorée et une bonne adhésivité au caoutchouc en particulier pour la préparation de câblé pour 2866pneus, caractérisé en ce que qu'il présente au moins 85 % en moles de blocs de construction de poly(éthylène téréphtalate), de 5 à 15 mmoles/kg de groupes carboxyle terminaux coiffés de polycarbonate et au maximum 4,5 mmoles/kg de groupes carboxyle terminaux libres et en ce qu'il a une résistance à la traction supérieure à 70 cN/tex, une résistance résiduelle supérieure à 50 % après l'essai d'hydrolyse, une résistance résiduelle supérieure à 70 % après l'essai d'aminolyse et une adhésivité au caoutchouc supérieure à 95 %.

**8.** Utilisation du polyster selon la revendication 7 pour la préparation de filaments et de fibres.

**9.** Utilisation des polyesters selon la revendication 7 pour la préparation de câblé pour pneus.